Europäisches Patentamt

European Patent Office

Office européen des brevets

(19)

(11)    EP 0 924 645 B1

(12)    EUROPEAN PATENT SPECIFICATION

(45) Date of publication and mention
of the grant of the patent:
**07.04.2004   Bulletin 2004/15**

(51) Int Cl.$^7$: **G06T 5/00**

(21) Application number: **98113597.3**

(22) Date of filing: **21.07.1998**

(54) **Blocking artifact reduction method using projections and postprocessor therefore**

Methode und Nachverarbeitungsvorrichtung zur Reduktion von Blockartefakten mittels Projektionen

Méthode et postprocesseur pour réduire les artefacts de blocs utilisant des projections

(84) Designated Contracting States:
**DE FR GB NL**

(30) Priority:  **22.12.1997  KR 9772028**

(43) Date of publication of application:
**23.06.1999   Bulletin 1999/25**

(73) Proprietor: **SAMSUNG ELECTRONICS CO., LTD.
Suwon-City, Kyungki-do (KR)**

(72) Inventor: **Chang, Joon-ho
Seoul (KR)**

(74) Representative: **Grünecker, Kinkeldey,
Stockmair & Schwanhäusser Anwaltssozietät
Maximilianstrasse 58
80538 München (DE)**

(56) References cited:
- **YONGYI YANG ET AL: "REGULARIZED
  RECONSTRUCTION TO REDUCE BLOCKING
  ARTIFACTS OF BLOCK DISCRETE COSINE
  TRANSFORM COMPRESSED IMAGES" IEEE
  TRANSACTIONS ON CIRCUITS AND SYSTEMS
  FOR VIDEO TECHNOLOGY,US,IEEE INC. NEW
  YORK, vol. 3, no. 6, 1 December 1993
  (1993-12-01), pages 421-432, XP000422543 ISSN:
  1051-8215**
- **PAEK H ET AL: "A PROJECTION-BASED
  POST-PROCESSING TECHNIQUE TO REDUCE
  BLOCKING ARTIFACT USING A PRIORI
  INFORMATION ON DCT COEFFICIENTS OF
  ADJACENT BLOCKS" PROCEEDINGS OF THE
  INTERNATIONAL CONFERENCE ON IMAGE
  PROCESSING (ICIP),US,NEW YORK, IEEE, 1996,
  pages 53-56, XP000733228 ISBN: 0-7803-3259-8**
- **Joon-Ho Chang et al. "A projections onto the
  overcomplete basis approach for block loss
  recovery", Proceedings of IEEE Int. Conf. on
  Image Processing, 26-29 Oct. 1997, vol. 2, pp.
  93-96, INSPEC: 5894171**

## Description

The present invention relates to a blocking artifact reduction method and a postprocessor therefor, and more particularly, to a blocking artifact reduction method for improving the quality of a restored image using a projection onto the overcomplete basis (POCB) algorithm.

In most currently used image coding schemes, image data is compressed in units of a block. One of the main drawbacks of these block-based coding schemes is blocking artifacts.

Compression of the image data is essential for transmitting a huge amount of image information through a transmission channel having a restricted bandwidth. The compression of the image data is performed by discarding some of the information from an image signal. In the block-based coding, since such a compression process, i.e., a process of discarding some image information (high frequency information), is independently performed in each block, discontinuities appear at block boundaries. Accordingly, blocks which do not exist in an original image signal are visually sensed. This phenomenon is called blocking artifacts, and causes deterioration of the quality of a received image. The blocking artifacts appear since the loss of transform coefficients is not correctly compensated for in a process of independently quantizing each block during decoding. In particular, the phenomenon is more obvious in image compression encoders which require a high compression rate.

A lowpass filtering method, a duplex converting method, a projection onto convex sets (POCS) method, and an optimal estimation of the transform coefficients method are provided in order to visually improve picture quality by reducing the blocking artifacts.

The lowpass filtering relies on the fact that high frequency components are generated in a frequency domain since the discontinuities at the block boundary locally have a waveform similar in shape to a staircase. The blocking artifacts are reduced by lowpass filtering the high frequency components, thus reducing them. In the duplex converting method, the discontinuities at the block boundary are reduced by allowing some duplex between blocks during encoding and decoding. In the POCS method, a more natural image is obtained by repeatedly projecting a decoded image onto a convex set using previous knowledge of the rough characteristics of an original image and a range of coefficients. In the optimal estimation of the transform coefficient method, the decoded transform coefficients are slightly corrected so that the discontinuities are minimal at the boundary between adjacent blocks in each block. This is possible since the blocking artifacts appear due to the excessive quantization error of the transform coefficients.

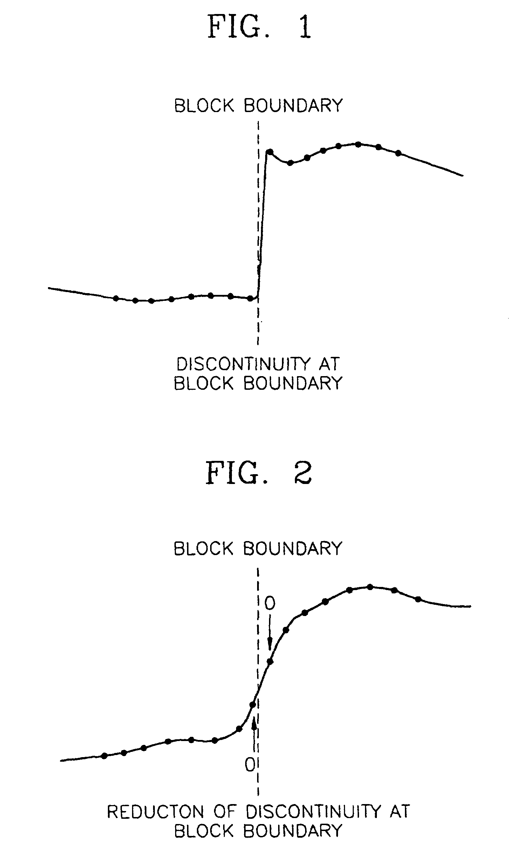

However, such conventional methods of reducing the blocking artifacts reduce a considerable change of pixel values at the block boundary to reduce the blocking artifacts. Namely, the blocking artifacts are reduced by detecting the considerable change of the pixel values at the block boundary as shown in FIG. 1 and slowing the change as shown in FIG. 2.

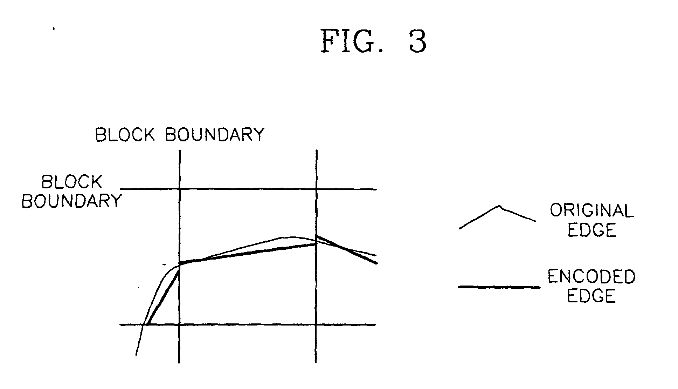

However, the blocking artifacts are not completely removed, since the blocking artifacts are not only shown in the discontinuities at the block boundary but also in image information such as an edge in a two dimensional plane, as shown in FIG. 3. Namely, the discontinuities in the image information such as edges and textures are not property restored.

Document titled 'A projections onto the overcomplete basis approach for block loss recovery', Proceedings of IEEE International Conference on Image Processing, 26-29 Oct., 1997, vol. 2, pp. 93-96, INSPEC: 5894171, presents an error concealment method to recover damaged blocks for block-based image coding schemes. A recovery problem is considered to estimate a larger block, which consists of a damaged block and an undamaged neighborhood. A projections onto the overcomplete-basis (POCB) algorithm is described in detail and the POCB algorithm is proposed to obtain coefficients to minimize a square difference of an undamaged neighborhood information and an estimate. The proposed method comprises the steps of initiating and calculating of projection coefficients, sequentially estimation to find a basis vector and to update an estimate value and the protection coefficients. The method is stopped in a further step, if a stopping condition is satisfied, wherein otherwise a return to the estimation step is performed. The proposed method effectively recovers edges and fine details as well as symbol textures.

It is the object of the present invention, which is defined by the appended claims, to provide a method for restoring a transform block based encoded image and a postprocessor for decoding and postprocessing a conversion block based encoded image, allowing to reduce discontinuities at a block boundary and discontinuities of image information such as edges and textures.

This object is solved by the subject matters of the independent claims.

Preferred embodiments are defined in the dependent claims.

It is an aspect of the present invention to provide a postprocessor for reducing blocking artifacts using the POCB in order to improve the picture quality of a received or restored image, in a still image or moving image codec.

According to one embodiment, there is provided a method for reducing blocking artifacts when restoring a block-based coded image, comprising the steps of (a) receiving a decoded image with respect to a block-based coded image and (b) generating a postprocessed image by approximating the decoded image to an original image using a non-orthogonal basis through a projections onto the overcomplete basis (POCB) algorithm.

According to another embodiment, there is provided a postprocessor for decoding and post-processing a conversion block-based encoded image, comprising an area segmenter for segmenting an input decoded image into blocks of a predetermined size and a POCB processor for performing the POCB algorithm on each of segmented blocks. Also, the postprocessor according to the present invention further comprises a bilinear averager for bilinearly averaging the image on which the POCB algorithm is performed and generating the postprocessed image signal of the transform block.

The above object and advantages of the present invention will become more apparent by describing in detail a preferred embodiment thereof with reference to the attached drawings in which:

FIG. 1 shows discontinuities at a block boundary;
FIG. 2 shows the reduction of the discontinuities at the block boundary;
FIG. 3 shows discontinuities of edges in a two dimensional plane;
FIG. 4 describes the concept of a bilinear averaging applied to the present invention; and
FIG. 5 is a block diagram of a postprocessor for reducing blocking artifacts using a POCB algorithm, according to an embodiment of the present invention.

Hereinafter, a preferred embodiment of a method for reducing blocking artifacts using a POCB algorithm, according to the present invention, and a postprocessor for the same, will be described with reference to the attached drawings.

A method for improving the picture quality of a restored image by reducing the blocking artifacts which appear in a decoded image when the image data was compressed using block-based encoding will be described.

In the present invention, the blocking artifacts are reduced by expressing an image in which the blocking artifacts are reduced by the linear combination of continuous functions having a directional property, in order to restore a surface continuity including the continuity of edges and textures as well as the continuity of a block boundary. In order to reduce the blocking artifacts, the linear coefficients satisfying the following equation 1 must be obtained.

[EQUATION 1]

$$\|f-\hat{f}\| = \|f - \sum_l p_l b_l \| < \varepsilon$$

wherein $\hat{f}, f, b_l$ and $\varepsilon$ respectively represent an image in which the blocking artifacts appear, an image in which the blocking artifacts are reduced (a postprocessed image), an arbitrary function having a directional property, and a constant denoting a threshold value.

Therefore, to reduce the blocking artifacts is to search the linear coefficient $p_l$ so that

$$\hat{f} = \sum_l p_l b_l$$

satisfies the above equation 1. The POCB method is used in order to search for the desired linear coefficient $p_l$.

The continuous functions (a non-orthogonal basis) used for the POCB method have a directional property and span an image signal space so that projection coefficients (linear coefficients) exist The following cosine function is provided as a continuous function $b_l$ satisfying such a condition.

[EQUATION 2]

$$b_l = (b_{l(u,v)}^{m(i,j)}) = (\alpha_{l(u,v)} \cos \frac{\pi(2i+1)u + \pi(2i+1)v}{2N})$$

wherein $m(i,j)$ and $l(u,v)$ are one-to-one correspondence functions for converting a two dimensional index to a one dimensional one, $\alpha_{l(u,v)}$ is a normalizing factor to make $\|b_l\|=1$. These cosine functions stem from two dimensional DCT basis functions through a trigonometric relation $2\cos A \cos B = \cos(A+B) + \cos(A-B)$ and construct an overcomplete basis for the $N^2$ dimensional Euclidean space (a real number space). This means that there exists a set of linear coefficients satisfying the condition of the above equation 1. Additionally, arguments in the above equation 2 have constant values along the line $(2i+1)u+(2j+1)v=k$(constant). Thus the cosine functions have a directional property which makes them suitable for characterizing edges and textures.

Also, N, i.e. a block size to which the POCB is applied, is $16\times16$, four times that of $8\times8$ DCT blocks. Therefore, the pixel position (i,j) and the range of frequency (u,v) of the block to which the POCB is applied is as follows.

[EQUATION 3]

$$0 \leq i,j \leq N\text{-}1, \ 0 \leq u \leq N\text{-}1, \ \text{-}(N\text{-}1) \leq v \leq N\text{-}1$$

The POCB algorithm for finding the linear coefficient $p_l$ satisfying the above equation 1 is as follows.

Step 1: calculate the initial projection coefficient of the image $f$ in which the blocking artifacts are not reduced, and initialize the estimate $\hat{f}^k$ of an estimate image.

The projection coefficient $p^k$ of the image $f$ is obtained by the equation 4 and is initialized as $\hat{f}^k = 0$. At this time, k is "0".

[EQUATION 4]

$$p_l^k = <f, b_l>, \; 0 \le l \le N_b - 1$$

wherein < > represents a cross-correlation and $N_b$ represents the number of $b_l$.

Step 2: Perform the POCB algorithm.

First, the projection coefficient $p_{l*}^k$. with the maximum energy is found among the projection coefficients $p_l^k$. At this time, $l*$ is obtained by the equation 5.

[EQUATION 5]

$$l* = arg \; max_{0 \le l \le N_b - 1} |p_l^k|$$

wherein arg max represents the value of $l$ which maximizes $|p_l^k|$.

Then, the estimate obtained by the equation 6 is renewed.

[EQUATION 6]

$$\hat{f}^{k+1} = \hat{f}^k + p_l^k . b_l^k.$$

wherein $\hat{f}^k, \hat{f}^{k+1}, p_l^k$, and $b_l$. are respectively a previous estimate, a renewed estimate, a projection coefficient having a previous maximum energy, and the non-orthogonal basic vector of the projection coefficient having the previous maximum energy.

Then, the projection coefficient with respect to a residual signal is renewed as shown in the equation 7.

[EQUATION 7]

$$p_l^{k+1} = <f - \hat{f}^{k+1}, b_l>$$
$$= <f - (\hat{f}^k + p_l^k . b_l.), b_l>$$
$$= <f - \hat{f}^k, b_l> - p_l^k . <b_l., b_l>$$
$$= p_l^k - p_l^k . <b_l, b_l.>, \; 0 \le l \le N_b - 1$$

The projection coefficient $p_l^{k+1}$ renewed in the above equation 7 can be easily obtained using known values without complete operations, since the calculated previous projection coefficient $p_l^k$, the previous projection coefficient $p_l^k$. having the maximum energy obtained by the equation 3, and the cross-correlations $<b_l, b_l.>$ between the non-orthogonal basis vector of the projection coefficients and the non-orthogonal basis vector of the projection coefficient having the maximum energy, are shown.

Step 3: If $\|f - \hat{f}^k\| < \varepsilon$, stop. Else set $k=k+1$ and go back to step 2.

When the POCB algorithm is performed with respect to the 16×16 block, the blocking artifacts in the block are reduced, but new blocking artifacts appear at the boundary of the 16×16 block. Therefore, the 16×16 block is overlappingly segmented into small blocks and then each block is processed by the POCB algorithm.

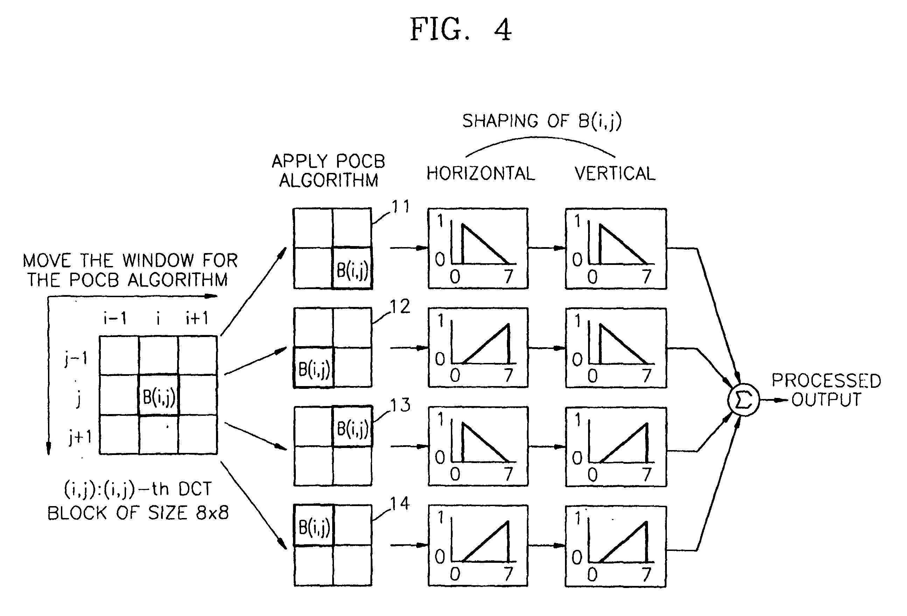

Namely, in order to reduce the blocking artifacts with respect to the block B(i,j) of the decoded image (the DCT block of the 8×8 size) as shown in FIG. 4, the POCB algorithm is performed with respect to B(i, j) by setting different weights at the boundary and other portions in a first window 11 located at the right side of the 16×16 block. In FIG. 4, horizontal and vertical weights are shown with respect to the block B(i, j). However, a quadrangular pyramid shaped weight exists, using the center of the window of the 16×16 blocksize as the top.

When the POCB algorithm is completed with respect to the first window 11, the window moves eight pixels to the right, thus constructing a new second window 12. A weight is set with respect to the second window 12 and the POCB algorithm is performed. When the POCB algorithm is completed with respect to the second window 12, the first window 11 moves eight pixels down, thus constructing a third window 13. A weight is set with respect to the third window 13 and the POCB algorithm is performed. When the POCB algorithm with respect to the third window 13 is completed, the third window 13 moves eight pixels to the right, thus constructing a fourth window 14. A weight is set with respect to the fourth window 14 and the POCB is performed.

Therefore, a final output value is obtained by adding together pixel values obtained by performing four POCB algorithms with respect to the block B(i,j).. This calculation method is called bilinear averaging.

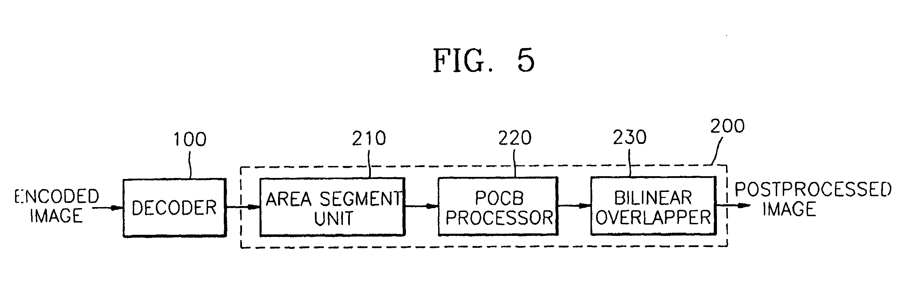

A postprocessor for reducing the blocking artifacts using the POCB method according to the present invention will be described with reference to FIG. 5. In FIG. 5, a segmenter 210 of a postprocessor 200 overlappingly segments a decoded image applied from a decoder 100 into small blocks. Namely, a blocksize N×N (N is 16) can be used in order to observe the blocking artifacts between adjacent blocks. This blocksize is equal to 2×2DCT blocks.

A POCB processor 220 generates a projection coefficient by processing the segmented 16×16 blocks on the basis of the above-mentioned first through third steps of POCB algorithm.

A bilinear averager 230 is comprised of a plurality of delays, an adder, and an averager. The delays are for temporarily storing the respective results obtained by performing the POCB algorithm on the respective windows. The adder is for adding the outputs of the delays. The averager is for averaging the output of the adder and generating the postprocessed image signal of the DCT block. In first through fourth windows having the block size of 16×16, including the block of the decoded image (the 8×8DCT block), different weighting values are set at a boundary and other portions as shown in FIG. 4.

The method for reducing the blocking artifacts using the POCB algorithm according to the present invention can be applied to a codec in which block-based coding schemes such as the JPEG standard and vector quantizers are used.

As mentioned above, according to the present invention, it is possible to effectively reduce the blocking artifacts in areas such as edges and textures other than a flat image, and to improve the picture quality of the received or restored image in the still image or moving image codec using block-based encoding.

## Claims

1. A method for restoring a transform block-based encoded image, comprising the steps of:

   (a) segmenting a decoded image with respect to the transform block-based encoded image into blocks of a predetermined size;
   (b) generating projection coefficients by performing a blocking artifact reduction algorithm on each of said segmented blocks, wherein said algorithm uses a projection onto an overcomplete basis; and
   (c) generating a postprocessed image,

   **characterized in that**
   said postprocessed image is generated by bilinearly averaging the projection coefficients using a plurality of windows (11, 12, 13, 14).

2. The method of claim 1, wherein the step of segmenting further comprises receiving the decoded image.

3. The method of claim 1 or 2, wherein the step of generating the postprocessed image further comprises approximating the decoded image to an original image using a non-orthogonal basis through said algorithm.

4. The method of claim 3, wherein a cosine function having a directional property and a completeness property is used as the non-orthogonal basis.

5. The method of claim 1, wherein the postprocessed image is expressed by a linear combination of continuous functions having a directional property.

6. The method of one of claims 1 to 5, wherein the step (b) comprises the steps of:

   (b1) calculating initial projection coefficients by cross-correlation between the decoded image and the non-orthogonal basis and initializing an estimate of the postprocessed image;

   (b2) obtaining the projection coefficient having the maximum energy among the initial projection coefficients;

   (b3) renewing the estimate using the previous projection coefficient having the maximum energy, the non-orthogonal basis vector of the previous projection coefficient, and a previous estimate;

   (b4) renewing projection coefficients with respect to a residual signal using calculated previous projection coefficients, a previous projection coefficient having the maximum energy, and a cross-correlation between the non-orthogonal basis vectors of previous projection coefficients and the non-orthogonal basis vector of the previous projection coefficient having the maximum energy; and

   (b5) repeatedly performing the steps (b2) through (b4) until the difference between the decoded image and the postprocessed image is less than a threshold value.

7. The method of claim 6, wherein a cosine function having a directional property and a completeness property is used as the non-orthogonal basis.

8. The method of one of claims 1 to 7, wherein projection coefficients with respect to a plurality of windows (11, 12, 13, 14) are generated by setting different weighting values at a boundary and other portions with respect to a plurality of windows having the same size as the segmented blocks including the decoded image of the transform block, and performing said algorithm in the step (b).

9. The method of claim 8, wherein the step (c) comprises the steps of:

   (c1) adding together projection coefficients with respect to the plurality of windows (11, 12, 13, 14), and applying a sum; and

   (c2) averaging the sum and generating a postprocessed image with respect to the decoded image of the transform block.

10. A postprocessor for decoding and postprocessing a conversion block-based encoded image, comprising:

    an area segmenter (210) for segmenting an input decoded image into blocks of a predetermined size;

a processor (220) for generating projection coefficients by performing a blocking artifact reduction algorithm on each of said segmented blocks, wherein said algorithm uses a projection onto an overcomplete basis; and

a bilinear averager (230) for post-processing by bilinearly averaging the projection coefficients using a plurality of windows (11, 12, 13, 14).

11. The postprocessor of claim 10, wherein the bilinear averager is further adapted for bilinearly averaging the image on which said algorithm is performed and generating the postprocessed image signal of the transform block.

12. The postprocessor of claim 11, wherein the processor performs said algorithm by setting different weighting values at a boundary and other portions of a plurality of windows (11, 12, 13, 14) of the same size as the segmented blocks including the decoded image of the transform block, to generate projection coefficients with respect to a plurality of windows.

13. The postprocessor of claim 12, wherein the bilinear overlapper comprises:

an adder for adding projection coefficients with respect to the plurality of windows and generating a sum; and

an averager for averaging the sum and generating the postprocessed image signal of the transform block.

14. The postprocessor of claim 13, wherein the bilinear averager further comprises a plurality of delays for temporarily storing projection coefficients with respect to the plurality of windows (11, 12, 13, 14).

15. The postprocessor of one of claims 10 to 14 being adapted to perform the method of one of claims 1 to 9.

**Patentansprüche**

1. Verfahren zur Wiederherstellung eines Transformationsblock-basierend codierten Bildes mit den Schritten:

(a) Segmentieren eines decodierenden Bildes in Bezug auf das Transformationsblock-basierend codierte Bild in Blöcke einer vorbestimmten Größe;

(b) Erzeugen von Projektionskoeffizienten durch Durchführen eines Blockartefakt-Reduktionsalgorithmus an jedem von den segmentierten Blöcken, wobei der Algorithmus eine Projektion auf eine übervollständige Basis anwendet; und

(c) Erzeugen eines nachverarbeiteten Bildes,

**dadurch gekennzeichnet, daß**
das nachverarbeitete Bild durch bilineare Mittelung der Projektionskoeffizienten unter Nutzung einer Vielzahl von Fenstern (11, 12, 13, 14) erzeugt wird.

2. Verfahren nach Anspruch 1, wobei der Schritt der Segmentierung ferner das Empfangen des decodierten Bildes umfaßt.

3. Verfahren nach Anspruch 1 oder 2, wobei der Schritt der Erzeugung des nachverarbeiteten Bildes ferner die Annäherung des decodierten Bildes an ein Originalbild unter Anwendung einer nicht-orthogonalen Basis durch den Algorithmus umfaßt.

4. Verfahren nach Anspruch 3, wobei eine Cosinusfunktion mit einer Richtungseigenschaft und einer Vollständigkeitseigenschaft als die nicht-orthogonale Basis verwendet wird.

5. Verfahren nach Anspruch 1, wobei das nachverarbeitete Bild durch eine Linearkombination stetiger Funktionen mit einer Richtungseigenschaft ausgedrückt wird.

6. Verfahren nach einem der Ansprüche 1 bis 5, wobei der Schritt (b) die Schritte umfaßt:

(b1) Berechnen anfänglicher Projektionskoeffizienten durch Kreuzkorrelation zwischen dem decodierten Bild und der nicht-orthogonalen Basis und Initialisierung eines Schätzwertes des nachverarbeiteten Bildes;

(b2) Erhalten der Projektionskoeffizienten mit der maximalen Energie aus den anfänglichen Projektionskoeffizienten;

(b3) Erneuern der Schätzung unter Verwendung des vorherigen Projektionskoeffizienten mit der maximalen Energie, des nicht-orthogonalen Basisvektors des vorherigen Projektionskoeffizienten, und eines vorherigen Schätzwertes;

(b4) Erneuern der Projektionskoeffizienten in Bezug auf ein Restsignal unter Verwendung berechneter vorheriger Projektionskoeffizienten, eines vorherigen Projektionskoeffizienten mit der maximalen Energie, und einer Kreuzkorrelation zwischen den nicht-orthogonalen Basisvektoren vorheriger Projektionskoeffizienten und dem nicht-orthogonalen Basisvektor des vorherigen Projektionskoeffizienten mit der maximalen Energie; und

(b5) wiederholtes Ausführen der Schritte (b2) bis (b4) bis die Differenz zwischen dem decodierten Bild und dem nachverarbeiteten Bild kleiner als ein Schwellenwert ist.

7. Verfahren nach Anspruch 6, wobei eine Cosinusfunktion mit einer Richtungseigenschaft und einer Vollständigkeitseigenschaft als die nicht-orthogonale Basis verwendet wird.

8. Verfahren nach einem der Ansprüche 1 bis 7, wobei Projektionskoeffizienten in Bezug auf eine Vielzahl von Fenstern (11, 12, 13, 14) durch Einstellen unterschiedlicher Gewichtungswerte an einer Grenze und an anderen Abschnitten in Bezug auf eine Vielzahl von Fenstern mit derselben Größe wie die das decodierte Bild des Transformationsblockes enthaltenden segmentierten Blöcke erzeugt werden, und der Algorithmus in dem Schritt (b) durchgeführt wird.

9. Verfahren nach Anspruch 8, wobei der Schritt (c) die Schritte umfaßt:

(c1) Aufaddieren der Projektionskoeffizienten in Bezug auf die Vielzahl der Fenster (11, 12, 13, 14) und Anlegen einer Summe; und

(c2) Mitteln der Summe und Erzeugen eines nachverarbeiteten Bildes in Bezug auf das decodierte Bild des Transformationsblockes.

10. Nachverarbeitungsvorrichtung zum Decodieren und Nachverarbeiten eines Transformationsblock-basierend codierten Bildes, umfassend:

eine Bereichs-Segmentierungseinrichtung (210) zum Segmentieren eines decodierten Eingangsbildes in Blöcke einer vorbestimmten Größe;

eine Prozessor (220) zum Erzeugen von Projektionskoeffizienten durch Durchführen eines Blockartefakt-Reduktionsalgorithmus an je-dem der segmentierten Blöcke, wobei der Al-gorithmus eine Projektion auf einer übervollständigen Basis anwendet; und

eine bilineare Mittelungseinrichtung (230) zum Nachverarbeiten durch bilineares Mitteln der Projektionskoeffizienten unter Anwendung einer Vielzahl von Fenstern (11, 12, 13, 14).

11. Nachverarbeitungsvorrichtung nach Anspruch 10, wobei die bilineare Mittelungseinrichtung ferner für eine bilineare Mittelung des Bildes, an welchem der Algorithmus durchgeführt wird, und zum Erzeugen des nachverarbeiteten Bildsignals des Transformationsblockes angepaßt ist.

12. Nachverarbeitungsvorrichtung nach Anspruch 11, wobei der der Prozessor den Algorithmus durch Einstellen unterschiedlicher Gewichtungswerte an einer Grenze und an anderen Abschnitten in Bezug auf eine Vielzahl von Fenstern mit derselben Größe wie die die das decodierte Bild des Transformations-blockes enthaltenden segmentierten Blöcke er-zeugt werden, um Projektionskoeffizienten in Bezug auf eine Vielzahl von Fenstern zu erzeugen.

13. Nachverarbeitungsvorrichtung nach Anspruch 12, wobei die bilineare Überlappungseinrichtung umfaßt:

einen Addierer zum Addieren von Projektionskoeffizienten in Bezug auf die Vielzahl von Fenstern und zum Erzeugen einer Summe; und

eine Mittelungseinrichtung zum Mitteln der Summe und Erzeugen des nachverarbeiteten Bildsignals des Transformationsblockes.

14. Nachverarbeitungseinrichtung nach Anspruch 13, wobei die bilineare Mittelungseinrichtung ferner eine Vielzahl von Verzögerungseinrichtungen zum kurzzeitigen Speichern der Projektionskoeffizienten in Bezug auf die Vielzahl von Fenstern (11, 12, 13, 14) aufweist.

15. Nachverarbeitungsvorrichtung nach einem der Ansprüche 10 bis 14, die für das Verfahren nach einem der Ansprüche 1 bis 9 angepaßt ist.

## Revendications

1. Procédé pour rétablir une image codée à base de blocs de transformation, comportant les étapes consistant à :

(a) segmenter une image décodée par rapport à l'image codée à base de blocs de transformation en blocs ayant une taille prédéterminée,
(b) générer des coefficients de projection en exécutant une algorithme de réduction d'artefacts de blocs sur chacun desdits blocs segmentés, où ledit algorithme utilise une projection sur une base saturée, et
(c) générer une image post-traitée,

**caractérisé en ce que**

ladite image post-traitée est générée en mettant en moyenne d'une manière bilinéaire les coefficients de projection en utilisant une pluralité de fenêtres(11, 12, 13, 14).

2. Procédé selon la revendication 1, dans lequel l'étape de segmentation comporte en outre la réception de l'image décodée.

3. Procédé selon la revendication 1 ou 2, dans lequel l'étape de génération de l'image post-traitée comporte en outre l'approximation de l'image décodée par rapport à une image d'origine en utilisant une base non-orthogonale à travers ledit algorithme.

4. Procédé selon la revendication 3, dans lequel une fonction cosinus ayant une propriété directionnelle et une propriété de complétude est utilisée en tant que base non-orthogonale.

5. Procédé selon la revendication 1, dans lequel l'image post-traitée est exprimée par une combinaison linéaire de fonctions continues ayant une propriété directionnelle.

6. Procédé selon l'une quelconque des revendications 1 à 5, dans lequel l'étape (b) comporte les étapes consistant à :

(b1) calculer des coefficients de projection initiaux à l'aide d'une intercorrélation entre l'image décodée et la base non-orthogonale et initialiser une estimation de l'image post-traitée,
(b2) obtenir le coefficient de projection ayant l'énergie maximale parmi les coefficients de projection initiaux,
(b3) renouveler l'estimation en utilisant le précédent coefficient de projection ayant l'énergie maximale, le vecteur de base non-orthogonale du précédent coefficient de projection, et une estimation précédente,
(b4) renouveler les coefficients de projection par rapport à un signal résiduel en utilisant des coefficients de projection précédents calculés, un coefficient de projection précédent ayant l'énergie maximale, et une intercorrélation entre les vecteurs de base non-orthogonale de coefficients de projection précédents et le vecteur de base non-orthogonale du précédent coefficient de projection ayant l'énergie maximale, et
(b5) exécuter d'une manière répétée les étapes (b2) à (b4) jusqu'à ce que la différence entre l'image décodée et l'image post-traitée soit inférieure à une valeur de seuil.

7. Procédé selon la revendication 6, dans lequel une fonction cosinus ayant une propriété directionnelle et une propriété de complétude est utilisée en tant que base non-orthogonale.

8. Procédé selon l'une quelconque des revendications 1 à 7, dans lequel des coefficients de projection se rapportant à une pluralité de fenêtres (11, 12, 13, 14) sont générés en définissant des valeurs de pondération différentes à une frontière et d'autres parties se rapportant à une pluralité de fenêtres ayant la même taille que les blocs segmentés incluant l'image décodée du bloc de transformation, et exécuter ledit algorithme dans l'étape (b).

9. Procédé selon la revendication 8, dans lequel l'étape (c) comporte les étapes consistant à :

(c1) additionner ensemble les coefficients de projection se rapportant à la pluralité de fenêtres (11, 12, 13, 14), et appliquer une somme, et
(c2) mettre en moyenne la somme et générer une image post-traitée se rapportant à l'image décodée du bloc de transformation.

10. Postprocesseur pour décoder et post-traiter une image codée à base de blocs de conversion, comportant :

un segmenteur de zone (210) pour segmenter une image décodée d'entrée en blocs ayant une taille prédéterminée,
un processeur (220) pour générer des coefficients de projection en exécutant un algorithme de réduction d'artéfacts de blocs sur chacun desdits blocs segmentés, où ledit algorithme utilise une projection sur une base saturée, et
un dispositif de mise en moyenne bilinéaire (230) pour effectuer un post-traitement en mettant en moyenne d'une manière bilinéaire les coefficients de projection en utilisant une pluralité de fenêtres (11, 12, 13, 14).

11. Postprocesseur selon la revendication 10, dans lequel le dispositif de mise en moyenne bilinéaire est en outre adapté pour mettre en moyenne d'une manière bilinéaire l'image sur laquelle ledit algorithme est exécuté et générer le signal d'image post-traitée du bloc de transformation.

12. Postprocesseur selon la revendication 11, dans lequel le processeur exécute ledit algorithme en définissant des valeurs de pondération différentes à une frontière et d'autres parties d'une pluralité de fenêtres (11, 12, 13, 14) ayant la même taille que les blocs segmentés incluant l'image décodée du bloc de transformation, afin de générer des coefficients de protection se rapportant à une pluralité de fenêtres.

**13.** Postprocesseur selon la revendication 12, dans lequel le dispositif de chevauchement bilinéaire comporte :

un additionneur pour additionner des coefficients de projection se rapportant à la pluralité de fenêtres et générer une somme, et
un dispositif de mise en moyenne pour mettre en moyenne la somme et générer le signal d'image post-traitée du bloc de transformation.

**14.** Postprocesseur selon la revendication 13, dans lequel le dispositif de mise en moyenne bilinéaire comporte en outre une pluralité de retards pour temporairement mémoriser des coefficients de projection se rapportant à la pluralité de fenêtres (11, 12, 13, 14).

**15.** Postprocesseur selon l'une quelconque des revendications 10 à 14 adapté pour exécuter le procédé selon l'une quelconque des revendications 1 à 9.

# FIG. 1

BLOCK BOUNDARY

DISCONTINUITY AT
BLOCK BOUNDARY

# FIG. 2

BLOCK BOUNDARY

REDUCTON OF DISCONTINUITY AT
BLOCK BOUNDARY

# FIG. 3

BLOCK BOUNDARY

BLOCK
BOUNDARY

ORIGINAL
EDGE

ENCODED
EDGE

# FIG. 4

SHAPING OF B(i,j)

APPLY POCB
ALGORITHM    HORIZONTAL    VERTICAL

MOVE THE WINDOW FOR
THE POCB ALGORITHM

i-1    i    i+1

j-1

j         B(i,j)

j+1

(i,j):(i,j)-th DCT
BLOCK OF SIZE 8x8

PROCESSED
OUTPUT

EP 0 924 645 B1

FIG. 5

ENCODED IMAGE → DECODER (100) → AREA SEGMENT UNIT (210) → POCB PROCESSOR (220) → BILINEAR OVERLAPPER (230) → POSTPROCESSED IMAGE

200